(19) Europäisches Patentamt
European Patent Office
Office européen des brevets

(11) **EP 2 580 095 B1**

(12) **EUROPÄISCHE PATENTSCHRIFT**

(45) Veröffentlichungstag und Bekanntmachung des Hinweises auf die Patenterteilung:
**24.08.2016 Patentblatt 2016/34**

(21) Anmeldenummer: **11725027.4**

(22) Anmeldetag: **31.05.2011**

(51) Int Cl.:
*B60T 8/32* *(2006.01)*       *B60T 8/40* *(2006.01)*
*B60T 13/66* *(2006.01)*      *B60T 13/68* *(2006.01)*
*B60T 13/74* *(2006.01)*

(86) Internationale Anmeldenummer:
**PCT/EP2011/058870**

(87) Internationale Veröffentlichungsnummer:
**WO 2011/154275 (15.12.2011 Gazette 2011/50)**

(54) **VERFAHREN UND VORRICHTUNG ZUR REGELUNG EINES ELEKTROHYDRAULISCHEN BREMSSYSTEMS FÜR KRAFTFAHRZEUGE**

METHOD AND DEVICE FOR CONTROLLING AN ELECTROHYDRAULIC BRAKING SYSTEM FOR MOTOR VEHICLES

PROCÉDÉ ET DISPOSITIF POUR RÉGULER UN SYSTÈME DE FREINAGE ÉLECTROHYDRAULIQUE DESTINÉ À DES VÉHICULES À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2011 DE 102011076675**
**10.06.2010 DE 102010029901**
**10.06.2010 DE 102010029902**

(43) Veröffentlichungstag der Anmeldung:
**17.04.2013 Patentblatt 2013/16**

(73) Patentinhaber: **Continental Teves AG & Co. oHG**
**60488 Frankfurt (DE)**

(72) Erfinder:
• **BÖHM, Jürgen**
**65558 Oberneisen (DE)**
• **ROLL, Georg**
**60438 Frankfurt (DE)**

(56) Entgegenhaltungen:
**WO-A1-2006/111393     US-A1- 2003 160 503**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Regelung eines Bremssystems für Kraftfahrzeuge gemäß dem Oberbegriff von Anspruch 1 sowie eine Vorrichtung zur Regelung eines elektrohydraulischen Bremssystems für Kraftfahrzeuge gemäß dem Oberbegriff von Anspruch 18.

In der Kraftfahrzeugtechnik finden "Brake-by-wire"-Bremssysteme eine immer größere Verbreitung. Solche Bremssysteme umfassen oftmals eine Pedalentkopplungseinheit, welche einem Hauptbremszylinder vorgeschaltet ist, wodurch eine Bremspedalbetätigung durch den Fahrer in der Betriebsart "Brake-by-wire" zu keiner direkten Betätigung des Hauptbremszylinders durch den Fahrer führt. Der Hauptbremszylinder wird stattdessen in der Betriebsart "Brake-by-wire" durch eine elektrisch steuerbare Druckbereitstellungseinrichtung betätigt, also "fremd"-betätigt. Um dem Fahrer in der Betriebsart "Brake-by-wire" ein angenehmes Pedalgefühl zu vermitteln, umfassen die Bremsanlagen üblicherweise eine Bremspedalgefühl-Simulationseinrichtung. Bei diesen Bremssystemen kann die Bremse auch ohne aktives Zutun des Fahrzeugführers aufgrund elektronischer Signale betätigt werden. Diese elektronischen Signale können beispielsweise von einem elektronischen Stabilitätsprogramm ESC oder einem Abstandsregelsystem ACC ausgegeben werden.

Aus der internationalen Patentanmeldung WO 2008/025797 A1 ist ein derartiges Bremssystem bekannt. Um auf eine aufwändige und energetisch ungünstige Zwischenspeicherung hydraulischer Stellenergie verzichten zu können, wird vorgeschlagen, dass das zur elektrischen Regelung des in einem zur Betätigung des Hauptbremszylinders verwendeten Zwischenraum eingesteuerten Druckes benötigte Druckmittel in der Druckbereitstellungseinrichtung drucklos bereitgehalten und bei Bedarf unter einen höheren Druck gesetzt wird. Die Druckbereitstellungseinrichtung wird hierzu z.B. durch eine Zylinder-Kolben-Anordnung gebildet, deren Kolben durch einen elektromechanischen Aktuator betätigbar ist. Ein Verfahren zur Regelung des Bremssystems, insbesondere der Druckbereitstellungseinrichtung, wird nicht beschrieben.

In der WO 2006/111393 A1 wird eine Bremsanlage mit einer elektromotorischen Antriebsvorrichtung offenbart, wobei die Antriebsvorrichtung einen Kolben eines Kolben-Zylinder-Systems über eine nicht-hydraulische Getriebevorrichtung verstellt, so dass sich im Arbeitsraum des Zylinders, der über eine Druckleitung mit einer Radbremse in Verbindung ist, ein Druck einstellt. Für den Fall, dass das Kolben-Zylinder-System mehrere Radbremsen bedient, wird in der WO 2006/111393 A1 ein Multiplex-Verfahren beschrieben, bei welchem die Radbremsen einzeln, zeitlich nacheinander von dem Kolben-Zylinder-System bedient werden. Zur Einstellung radindividueller Radbremsdrücke sind hierzu häufige und schnelle Verstellvorgänge durch die Antriebsvorrichtung und kurze Schaltzeiten der Rad-Einlassventile notwendig.

Es ist Aufgabe der vorliegenden Erfindung, ein Verfahren zur Regelung eines elektrohydraulischen "Brake-by-wire"-Bremssystems mit einer elektrisch steuerbaren Druckbereitstellungseinrichtung, welche eine Zylinder-Kolben-Anordnung umfasst, deren Kolben durch einen elektromechanischen Aktuator betätigbar ist, bereitzustellen, das eine erhebliche Verbesserung der Druckbereitstellungseinrichtungsfunktionen ermöglicht.

Diese Aufgabe wird erfindungsgemäß durch ein Verfahren gemäß Anspruch 1 sowie eine Vorrichtung gemäß Anspruch 18 gelöst.

Unter einer Bremsdruckregel- oder Bremsdrucksteuerfunktion wird bevorzugt eine Antiblockierregelung (ABS), eine Traktions- oder Antriebsschlupfregelung (TCS, ASR), ein elektronisches Stabilitätsprogramm (ESP, ESC, Giermomentenregelung) oder eine Fahrerassistenzfunktionen wie z.B. ACC, HSA, HDC etc. verstanden.

Vorteilhafterweise wird das erfindungsgemäße Verfahren in einem Bremssystem für Kraftfahrzeuge durchgeführt, das in einer sog. "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Bevorzugt sind die Radbremsen an den hydraulischen Druckraum der Zylinder-Kolben-Anordnung angeschlossen. Zwischen einer, insbesondere jeder, Radbremse und dem Druckraum ist bevorzugt ein elektrisch ansteuerbares Einlassventil angeordnet, mit welchem die Radbremse von dem Druckraum hydraulisch abtrennbar ist. Zwischen dem Druckraum der Zylinder-Kolben-Anordnung und dem/den Einlassventil(en) ist vorteilhafterweise ein Hauptbremszylinder angeordnet, welcher von der Zylinder-Kolben-Anordnung betätigt werden kann.

Bevorzugt ist eine, insbesondere jede, Radbremse über ein elektrisch ansteuerbares Auslassventil mit einem Bremsflüssigkeitsvorratsbehälter verbindbar.

Ebenso ist es bevorzugt, dass der hydraulische Druckraum der Zylinder-Kolben-Anordnung über mindestens ein elektrisch ansteuerbares Ventil mit einem Bremsflüssigkeitsvorratsbehälter verbindbar ist.

Bevorzugt umfasst das Bremssystem einen mittels der elektrisch steuerbaren Druckbereitstellungseinrichtung betätigbaren Hauptbremszylinder, an den Radbremskreise angeschlossen sind, und eine zwischen einem Bremspedal und dem Hauptbremszylinder angeordnete hydraulische Pedalentkopplungseinheit.

Weitere bevorzugte Ausführungsformen der Erfindung ergeben sich aus den Unteransprüchen und der nachfolgenden Beschreibung anhand von Figuren.

Es zeigen schematisch:

Fig. 1    ein Prinzipschaltbild eines elektrohydraulischen Bremssystems zur Durchführung eines erfindungsgemäßen Verfahrens,

Fig. 2    zeitliche Verläufe verfahrensrelevanter Größen,

Fig. 3    ein Blockschaltbild eines ersten Ausführungsbeispiels einer erfindungsgemäßen Regelschaltung,

Fig. 4    ein Blockschaltbild eines zweiten Ausführungsbeispiels einer erfindungsgemäßen Regelschaltung,und

Fig. 5    ein Blockschaltbild eines dritten Ausführungsbeispiels einer erfindungsgemäßen Regelschaltung.

Das hier beschriebene Regelungskonzept beschreibt die Einstellung von geeigneten Vordruckverläufen in einem Druckraum der elektrohydraulischen Druckbereitstellungseinrichtung eines aktiven Bremssystems, insbesondere die Einstellung eines geeigneten Vordruckwerts mittels des elektromotorich angetriebenen Kolbens der Druckbereitstellungseinrichtung in einem aktiven Bremssystem unter Berücksichtigung radindividueller Bremsdruckregel- oder Bremsdrucksteuerfunktionen.

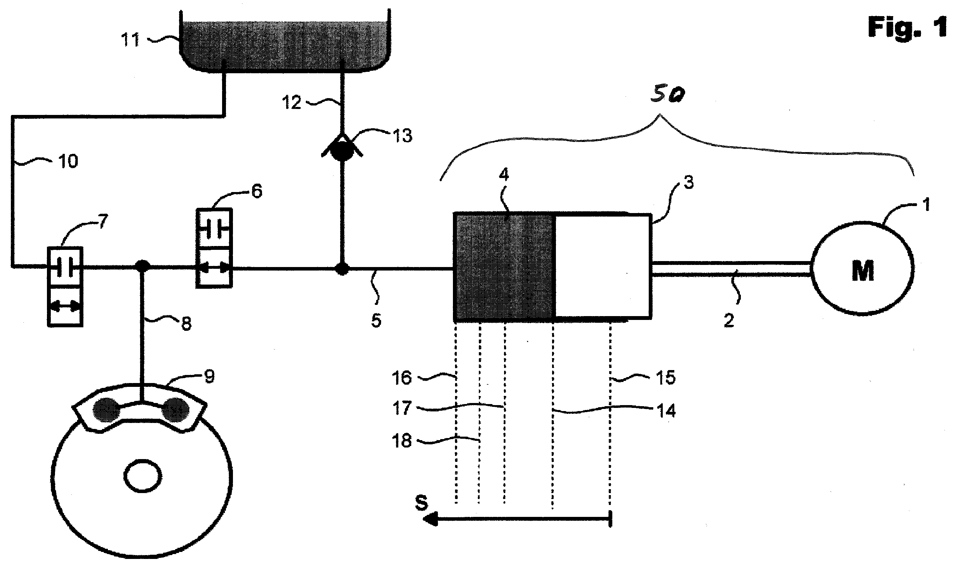

Fig. 1 zeigt das vereinfachte Prinzip eines aktiven Bremssystems für ein geregeltes Rad eines hydraulisch gebremsten Fahrzeugs. Ein erfindungsgemäßes Verfahren wird bevorzugt in einem (aktiven) Bremssystem durchgeführt, bei dem der Fahrer, z.B. mittels Bremspedalweg, eine Druckanforderung stellt und diese elektronisch mit Hilfe einer Druckbereitstellungseinrichtung, z.B. umfassend einen Elektromotor bzw. Aktuator 1, ein geeignetes Getriebe 2 und einen Kolben 3 in einem hydraulischen Druckraum 4, umgesetzt wird, indem der Kolben 3 um einen Weg s aus einer Ruheposition 15 in eine Position 14 fährt, sodass ein bestimmtes Volumen der Bremsflüssigkeit aus dem Druckraum 4 über die Leitung 5 und ein zunächst geöffnetes Einlassventil 6 in die Bremsleitung 8 und somit in die Radbremse 9 verschoben wird. Damit wird in der Radbremse 9 ein Bremsdruck erzeugt. Ein Bremsdruckabbau kann erfolgen, indem der Kolben 3 wieder in Richtung der Ruheposition 15 zurückgefahren wird. Ein schneller Bremsdruckabbau, wie er z.B. im Falle einer ABS-Regelung benötigt wird, ist aber auch über die Ventilkombination 6, 7 möglich, indem das Einlassventil 6 geschlossen und das Auslassventil 7 für eine bestimmte Zeit geöffnet wird. Dann strömt Bremsflüssigkeit aus der Radbremse 9 über Leitung 8 durch das Auslassventil 7 und somit über die Leitung 10 in den Bremsflüssigkeitsbehälter 11. Diese Maßnahme des Druckabbaus ist insbesondere dann sinnvoll, wenn der Druckraum 4 mehrere Radbremsen parallel bedient.

Grundsätzlich kann das in Fig. 1 dargestellte Bremssystem um beliebig viele Radbremsen 9 erweitert werden, indem mehrere Leitungen 5 zu den Radkreisen geführt werden, wobei jeder Radkreis bevorzugt über ein individuelles Ventilpaar 6, 7 verfügt.

Um aus Sicherheitsgründen eine Mehrkreisigkeit des Systems zu bilden, können mehrere Kolben 3 und mehrere Druckräume 4 vorgesehen werden. Für einen PKW ist eine Zweikreisigkeit sinnvoll, wobei jeweils zwei Radbremsen mit einer von zwei Druckkammern verbunden sind.

Gegenüber der vereinfachten Darstellung des Systems in Fig. 1 sind zahlreiche Verbesserungen und verschiedene Ausführungsformen des Prinzips denkbar, z.B. bei der Wahl der Ventile. Auch kann zwischen dem hydraulischen Druckraum 4 und der/den Radbremse(n) 9 z.B. ein Hauptbremszylinder angeordnet sein, so dass der in dem Druckraum 4 erzeugte Druck einem hydraulischen Zwischenraum, z.B. in einer Betätigungseinrichtung, zugeführt wird, wodurch der Hauptbremszylinder betätigt wird.

Die Erfindung befasst sich mit der Aufgabe der Einstellung geeigneter Vordrücke im Druckraum 4.

Die Notwendigkeit eines Vordrucks ergibt sich immer dann, wenn der Fahrer mittels Bremspedal einen allgemeinen Bremsdruck für alle Räder des Kraftfahrzeugs anfordert, oder wenn diese Druckanforderung durch eine Assistenzfunktion ACC (adaptive cruise control), HSA (hill start assist), HDC (hill descent control) etc.) gestellt wird, oder wenn eine spezielle radindividuelle Bremsenregelfunktion aktiv wird, wie beispielsweise ABS (Antiblockiersystem), TCS (Traction Control System) oder ESP (Elektronisches Stabilitätprogramm).

Die Assistenzfunktionen fordern zumeist einen globalen Bremsdruck für alle Räder an, ähnlich wie der Fahrer mit Hilfe der mit dem Bremspedal ausgelösten Grundbremsung. In diesen Fällen wird der Druck bei geöffnetem Einlassventil 6 an allen Bremskreisen gleichermaßen durch Vorfahren des Kolbens erzeugt.

Die Antiblockierfunktion (ABS) begrenzt oder reduziert im Allgemeinen nur den vom Druckraum 4 aufgebrachten Druck für einzelne Räder, um diese in einem gewünschten optimalen Bremsschlupf zu halten.

Bei der Traktionskontrolle (TCS) werden einzelne Räder, die aufgrund eines zu hohen Antriebsmomentes zum Durchdrehen neigen, gezielt abgebremst. Dazu muss das System einen aktiven Druck im Druckraum 4 erzeugen, der nicht vom Fahrer angefordert wurde. Der Druck aus dem Druckraum 4 muss dann individuell über die Ventile 6, 7 in die Radbremse 9 des zu bremsenden Rades geleitet werden, während die Bremskreise der anderen Räder, die ungeregelt bleiben, mit Hilfe ihrer Einlassventile vom Druckraum 4 abgetrennt werden. Ähnliches gilt für das elektronische Stabilitätsprogramm (ESP). Hier werden Bremsdrücke ebenfalls aktiv und selektiv an einzelnen Rädern aufgebracht, um die Dynamik des Fahrzeugs um die Hochachse zu beeinflussen.

In allen Fällen gilt, dass vorteilhafterweise der Vordruck des Druckraums 4 so einzustellen ist, dass das Rad mit der höchsten Bremsdruckanforderung sicher mit dem notwendigen Druck versorgt werden kann. An einem Rad, das weniger Druck benötigt als im Druckraum 4 erzeugt wird, muss der Druck dadurch begrenzt werden, dass das dem Rad zugehörige Einlassventil 6 dauerhaft oder zeitweise geschlossen wird. Sollte das Rad dann einen geringeren Druck als den bereits eingestellten benötigen und ist der Vordruck höher als der gewünschte Raddruck, so muss Bremsflüssigkeit mittels des zugehörigen Auslassventils 7 aus der Radbremse 9 in den Behälter 11 entlassen werden.

Beispielsgemäß wird der Vordruck $P_{Pre\_Pressure}$ im Druckraum 4 gemäß folgender Beziehung eingestellt:

$$P_{Pre\_Pressure} = Maximum(P_{Request\_1}, \dots, P_{Request\_n})$$

mit

$P_{Request\_i}$: Druckanforderung für das i-te Rad,
n: Anzahl der Räder,

d.h. der Vordruck ergibt sich als das Maximum der Druckanforderungen der einzelnen Räder.

Die radindividuelle Druckanforderung $P_{Request\_i}$ für das i-te Rad wird beispielsgemäß folgendermaßen berechnet:

$$P_{Request\_i} = Minimum((P_{ABS\_act\_i} + \Delta P), (Maximum(P_{Request\_Driver\_i}, P_{Request\_Assist\_i}, P_{Request\_TCS\_i}, P_{Request\_ESP\_i})))$$

mit

$P_{Request\_Driver\_i}$: Fahrerwunschdruck (angefordert mittels Bremspedalbetätigung),
$P_{Request\_Assist\_i}$: Höchste Druckanforderung aufgrund aktiver Assistenzfunktionen (z.B. aus ACC, HSA, HDC etc.),
$P_{Request\_Tcs\_i}$: Druckanforderung durch TCS bzw. BTCS (d.h. TCS mittels individueller Radbremsung),
$P_{Request\_Esp\_i}$: Druckanforderung durch ESP,
$P_{ABS\_act\_i}$: Blockierdruckniveau, das während einer ABS-Regelung am i-ten Rad erkannt wurde, bzw. Maximaldruck (z.B. 200bar), wenn ABS am i-ten Rad keine Regelungspriorität hat,
$\Delta P$: zusätzlicher Druckbetrag (beispielsweise 20bar).

Diese Gleichung besagt, dass zur Bestimmung von $P_{Request\_i}$ zuerst die Maximalanforderung aus dem Fahrer-Bremswunsch, dem aktiven Bremswunsch der Assistenzfunktionen sowie aus der aktiven Bremsdruckanforderung aus TCS und ESP gebildet wird. Danach wird geprüft, ob am i-ten Rad eine ABS-Regelung läuft und auch gegenüber den anderen Regelfunktionen (beispielsweise gegenüber ESP) Priorität hat. In diesem Fall wird die zuvor bestimmte Maximalanforderung auf das Druckniveau begrenzt, das für die ABS-Regelung erforderlich ist, was mit der obigen Minimumfunktion erreicht wird. Zur Einstellung des ABS-Drucks wird ein Vordruck veranschlagt, der sich aus der Summe von $P_{ABS\_act\_i}$ und $\Delta P$, also dem erkannten Blockierdruckniveau und einem Sicherheitsaufschlag $\Delta P$ (z.B. etwa 20bar) ergibt.

Das Blockierdruckniveau wird bei einem Übergang zu höheren Reibwerten laufend angehoben, indem es dann auf den jeweils erreichten Raddruck gesetzt wird.

Der Sicherheitsaufschlag $\Delta P$ im Vordruck gegenüber dem Raddruck ist notwendig, da die ABS-Funktion den Raddruck grundsätzlich durch zyklisches Öffnen und Schließen der Einlass- und Auslassventile einstellt. Eine Druckdifferenz $\Delta P$ ist am Einlassventil erforderlich, um einen Flüssigkeitsdurchfluss bei getaktetem oder teilweisem Öffnen des Ventils über einen analogen Stromwert sicher zu gewährleisten.

Wenn ABS nicht aktiv ist oder an dem betrachteten Rad keine Regelungspriorität hat, wird als ABS-Druckanforderung der Maximaldruck des Systems, also beispielsweise 200bar, angenommen. Über die Minimalfunktion in obiger Gleichung wird dann die Maximalanforderung aller anderen Funktionen ausgewählt.

Da bei dem oben beschriebenen Verfahren des radindividuellen Druckabbaus über das Ventilpaar 6, 7 Volumen aus dem Druckraum 4 in den Behälter 11 entlassen wird, wird sich der Kolben 3, insbesondere während einer ABS-Bremsung, allmählich in Richtung der Endposition 16 (Endanschlag) bewegen, sodass nach einigen Regelungszyklen kein weiterer Druckaufbau mehr möglich ist.

Bevorzugt ist also vorgesehen, während einer ABS-Regelung spezielle Zyklen einzulegen, in denen der Kolben 3 mit einer definierten, aber möglichst großen Aktuatorgeschwindigkeit in Richtung der Startposition 15 zurückgefahren wird und damit Flüssigkeitsvolumen aus dem Behälter 11 über die Leitung 12 und das Rückschlagventil 13 zurücksaugt. Damit der Kolben nicht die Radbremse 9 leer saugt, wird während der Saugzyklen das Einlassventil 6 eines jeden Rades geschlossen. Dadurch wird die Leitung 8 hydraulisch abgetrennt, und der Druck in der Bremse 9 bleibt auf konstantem Niveau.

Nach Abschluss eines Saugzyklus' befindet sich wieder genug Flüssigkeit im Druckraum 4, sodass die ABS-Regelung mit zyklischen Druckauf- und -abbauphasen fortgesetzt werden kann.

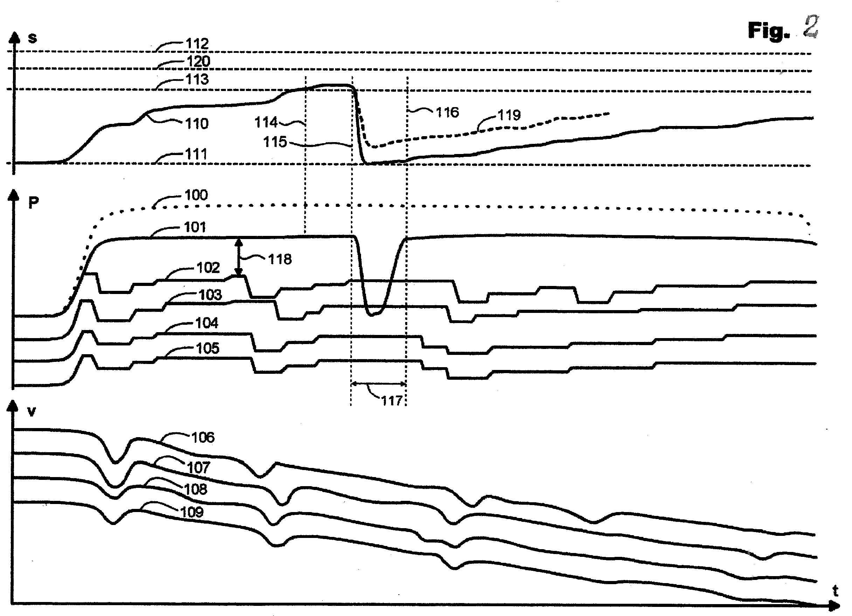

In Fig. 2 ist beispielsgemäß ein zeitlicher Ablauf der Vordruck- bzw. Volumenregelung für den Druckraum 4 am Beispiel einer ABS-Regelung für die vier Radbremsen eines PKWs dargestellt. Der Fahrer hat aufgrund einer zu starken Bremspedalbetätigung den hohen Bremsdruckverlauf 100 (gestricheltes Signal) angefordert. Die Radbremsdrücke der vier Radbremsen sind als Verläufe 102 bis 105 abgebildet (in Fig. 2 wegen besserer Übersichtlichkeit gegeneinander versetzt dargestellt). Die Bremsenregelung erzeugt aus der Anforderung 100 den Druckverlauf 101 im Druckraum 4. Da hierdurch alle vier Räder überbremst werden, was anhand der Radgeschwindigkeiten 106 bis 109 (in Fig. 2 wegen besserer Übersichtlichkeit gegeneinander versetzt dargestellt) nach bekannten Verfahren ermittelt wird, reduziert das hier vorgeschlagene Regelungskonzept den Vordruck im Druckraum 4 auf den Wert 101, der unterhalb der Fahreranforderung 100 liegt. Damit können alle Räder dauerhaft in der ABS-Regelung gehalten werden, sodass der hohe Vordruck 100 gar nicht erforderlich ist.

Wie bereits oben beschrieben, wird beispielsgemäß vorteilhafterweise vorgeschlagen, den Vordruck in Druckraum 4 grundsätzlich nur um einen bestimmten Betrag 118 (entspricht dem Wert $\Delta P$ in der obigen Gleichung, also beispielsweise 20bar) höher zu wählen als den Druck, den das ABS für das Rad mit dem höchsten Druckniveau anfordert.

Fig. 2 zeigt im oberen Teil den Weg s des Kolbens 3 (Signal 110). Der Weg startet bei der Ruheposition 111 (entspricht dem Wert 15 in Fig. 1) und bewegt sich aufgrund des Bremsdruckaufbaus und des schrittweisen Volumenverbrauchs durch das Öffnen der Auslassventile 8 im Falle der Druckabbauphasen allmählich in Richtung der Endposition 112 (entspricht dem Wert 16 in Fig. 1).

Beispielsgemäß wird ein Saugzyklus gestartet, wenn der Kolben 3 die kritische Position 113 (entspricht dem Wert 17 in Fig. 1) überschreitet, was in Fig. 2 zum Zeitpunkt 114 der Fall ist. Die Regelung ermittelt dann, wann der Saugzyklus aufgrund der ABS-Regelungssituation erlaubt ist. Die Ermittlung geschieht beispielsgemäß nach einem weiter unten beschriebenen Konzept. Im Beispiel von Fig. 2 möge ein Saugen zum Zeitpunkt 115 möglich sein. In diesem Beispielfall wird der Kolben 3 dann im Zeitintervall 117 vollständig, also in die Ruheposition 111 zurückgefahren, was dazu führt, dass das maximal mögliche Volumen aus dem Behälter 11 geholt wird.

Gemäß einem anderen Ausführungsbeispiel wird der Kolben 3 nicht immer in die Ruheposition 111 zurückgefahren. Es ist auch möglich, nicht immer diesen maximalen Weg zu verfahren sondern abhängig von der Regelungssituation gegebenenfalls auch weniger Volumen zu holen, was beispielsweise zum gestrichelten Wegverlauf 119 führen würde.

Anschließend wird der Kolben 3 wieder etwas vorgefahren, um den Vordruck 101 wieder auf das ursprüngliche und für die weitere ABS-Regelung erforderliche Niveau anzuheben. Zum Zeitpunkt 116 ist der Vordruck wieder erreicht, sodass die ABS-Regelung fortgesetzt werden kann.

Im Zeitintervall 117 wird das Einlassventil 6 an allen Radbremskreisen geschlossen, damit diese ihre Druckniveaus behalten, obwohl der Vordruck 101 im Zeitintervall 117 durch den Saugvorgang bis auf 0 zusammenbricht.

Ein derartiger Saugzyklus kann je nach Volumen- und Motorauslegung ca. 100 bis 200 ms dauern. Da in diesem Zeitintervall kein Druckaufbau in einem der Radkreise erfolgen kann, müssen die Zeitpunkte für das Saugen so gewählt werden, dass in der Folgezeit von ca. 100 bis 200 ms möglichst an keinem Rad die Notwendigkeit für einen erheblichen Druckaufbau erwartet wird. Das Regelungskonzept sieht daher vorteilhafterweise vor, dass sicherheitshalber auf jeden Fall ein Saugzyklus aktiviert wird, wenn die Kolbenposition 110 eine hohe Schwelle 120 überschreitet (entspricht der Schwelle 18 in Fig. 1).

Im Beispiel der Fig. 2 ist ein Saugen ab dem Zeitpunkt 115 möglich, da sich alle vier Räder in einer hinreichend langen Druckaufbauphase befinden, sodass die Raddruckniveaus alle in der Nähe der zuvor erkannten Blockierdrücke liegen. Ein Halten dieser Drücke über einen Zeitraum von 100 bis 200 ms sollte daher nicht zu einer Unterbremsung führen. Die Schwellen 113 (für bedingtes) und 120 (für unbedingtes Saugen) können innerhalb der Startposition 111 und dem Endanschlag 112 fest vorgegeben werden.

Ebenso kann bei jedem Saugvorgang grundsätzlich auf die Kolbenstartposition 111 zurückgefahren werden. Es ist aber vorteilhaft, sowohl die Auslöse-Schwellen als auch den Hub des Saugvorgangs ereignisgesteuert, also dynamisch während des jeweiligen Bremsenregelvorgangs zu bestimmen.

Gemäß eines weiteren Ausführungsbeispiels der Erfindung werden die Schwellen 113 und 120 und die Zielposition für den Saugvorgang abhängig von der aktuellen Fahrzeuggeschwindigkeit gewählt. Wird beispielsweise bei einer Vollbremsung eine kleine Restgeschwindigkeit erreicht, so kann davon ausgegangen werden, dass für den Abschluss der ABS-Regelung nicht mehr viel Volumen benötigt wird. Aus Komfortgründen sollte also nahe dem erreichten Stillstand möglichst nicht mehr oder nur mit geringem Hub gesaugt werden. Bei kleinen Fahrbahnreibwerten, also kleiner Fahrzeugverzögerung, hingegen kann der Fall eintreten, dass auch bei geringen Restgeschwindigkeiten noch ein hoher Volumenbedarf besteht, da die Restregelung von z.B. 20 km/h bis zum Stillstand noch mehrere Sekunden dauern kann. Außerdem kann sich bei aktuell kleinem Reibwerten prinzipiell eine erhebliche Reibwerterhöhung einstellen, die dann eine kontinuierliche Druckerhöhung, also ein Vorfahren des Kolbens 3 (möglichst ohne lange Druckhaltezeit) notwendig macht. Daher wird beispielsgemäß bei kleinen Reibwerten bzw. geringer Fahrzeugverzögerung zumindest die untere Schwelle 113 kleiner gewählt, damit ein möglichst frühes Saugen dazu führt, dass stets genug Regelvolumen im Druckraum 4 vorliegt. Außerdem wird der Kolben dann immer möglichst in die Startposition 111, also mit maximalem Hub zurückgefahren.

Gemäß einem anderen Ausführungsbeispiel wird zumindest die Schwelle 113 auch dann verringert, wenn das Fahrzeug voraussichtlich bald auf einer Fahrbahn mit großem Gefälle zum Stehen kommt. Zum Halten des Fahrzeugs an einem steilen Hang wird viel Druck, also auch eine hohe Volumenreserve, benötigt. Würde bei kleinen Raddrücken im Stand ein Saugzyklus eingeleitet, so könnte das Fahrzeug während der Saugzeit von 100 bis 200 ms unerwünscht wegrollen.

Bei Fahrzeugen mit einer Möglichkeit, den Grad eines Gefälles zu messen (beispielsweise mit Hilfe eines Längsbeschleunigungssensors), wird die Schwelle 113 daher beispielsgemäß trotz kleiner Restgeschwindigkeiten mit zunehmender Neigung verringert. Bei kleiner Neigung kann ein erneutes Saugen kurz vor Stillstand durch eine Erhöhung der Schwelle 113 unterdrückt werden.

Bevorzugt wird das Verfahren zur Regelung eines aktiven hydraulischen Bremssystems bestehend aus einem elektromotorisch angetriebenen Kolben, der in einem Zylinder einen zentralen Vordruck für die Radbremsen eines Kraftfahrzeugs erzeugt, einem Einlassventil für jede Radbremse, mit dem das Rad von dem Vordruckraum hydraulisch abgetrennt werden kann, einem Auslassventil für jeden Radbremskreis, mit dem zwecks Druckabbau Bremsflüssigkeit aus der zugehörigen Radbremse in einen Flüssigkeitsvorratsbehälter abgelassen werden kann, und einer ventilgesteuerten hydraulischen Verbindungsleitung zwischen dem Vorratsbehälter und dem Zylinder des Kolbens durchgeführt.

Bevorzugt wird anhand der jeweils aktiven Bremsenregelfunktionen ein geeigneter Vordruck bestimmt und dieser durch eine Positionierung des Kolbens eingestellt, wobei die jeweils erreichte Position des Kolbens mit zumindest einem Schwellwert verglichen wird. Bei Überschreitung des mindestens einen Schwellwertes wird ein Saugzyklus ausgelöst, bei dem der Kolben um einen dynamisch berechneten Wegbetrag in Richtung seiner Ruheposition verfahren wird, sodass Bremsflüssigkeit, die für die weitere Regelung notwendig ist, aus dem Vorratsbehälter in den Zylinder zurückgesaugt wird.

Bevorzugt wird der durch den Kolben eingestellte Vordruck $P_{Pre\_Pressure}$ als Maximum aller Druckanforderungen für die n Räder des Fahrzeugs bestimmt. Besonders bevorzugt wird der Vordruck gemäß

$$P_{Pre\_Pressure} = Maximum(P_{Request\_1}, \ldots, P_{Request\_n})$$

mit

$P_{Request\_i}$: Druckanforderung für das i-te Rad bestimmt,
wobei die radindividuelle Druckanforderung $P_{Request\_i}$ für das i-te Rad anhand

$$P_{Request\_i} = Minimum((P_{ABS\_act\_i} + \Delta P), (Maximum(P_{Request\_Driver\_i}, P_{Request\_Assist\_i}, P_{Request\_TCS\_i}, P_{Request\_ESP\_i})))$$

mit

$P_{Request\_Driver\_i}$: Fahrerwunschdruck,
$P_{Request\_Assist\_i}$: Höchste Druckanforderung aufgrund aktiver Assistenzfunktionen,
$P_{Request\_TCS\_i}$: Druckanforderung durch Traktionsregelfunktion,
$P_{Request\_ESP\_i}$: Druckanforderung durch fahrdynamische Stabilitätsregelfunktion,
$P_{ABS\_act\_i}$: Blockierdruckniveau des Rades während Antiblockierregelung, und
$\Delta P$: zusätzlicher Druckbetrag

bestimmt wird.

Gemäß einer Weiterbildung der Erfindung wird die mindestens eine, insbesondere alle, Positionsschwellen für den Kolben, die den Saugzyklus auslösen, in Abhängigkeit von der momentanen Fahrgeschwindigkeit des Fahrzeugs berechnet.

Vorteilhafterweise wird/werden die Positionsschwelle(n) für den Kolben, die den Saugzyklus auslösen, in Abhängigkeit vom erreichten Druckniveau der Radbremsen des Fahrzeugs berechnet.

Bevorzugt wird/werden die Positionsschwelle(n) für den Kolben, die den Saugzyklus auslösen, in Abhängigkeit einer erkannten Fahrbahnneigung berechnet.

Gemäß einer bevorzugten Weiterbildung der Erfindung wird ein Saugzyklus nur dann ausgelöst, wenn der Kolben eine untere Positionsschwelle überschritten hat und der Saugzyklus aufgrund des Bremsen-Regelungszustands an den Rädern erlaubt wird.

Bevorzugt wird ein Saugzyklus auf jeden Fall ausgelöst, wenn der Kolben eine hohe (zweite) Positionsschwelle überschritten hat.

Der Wegbetrag, um den der Kolben im Falle eines aktiven Saugzyklus verfahren wird, wird bevorzugt in Abhängigkeit von der momentanen Fahrgeschwindigkeit des Fahrzeugs stimmt.

Alternativ oder zusätzlich wird der Wegbetrag, um den der Kolben im Falle eines aktiven Saugzyklus verfahren wird, bevorzugt in Abhängigkeit von dem erreichten Druckniveau der Radbremse(n) des Fahrzeugs berechnet.

Alternativ oder zusätzlich wird der Wegbetrag, um den der Kolben im Falle eines aktiven Saugzyklus verfahren wird, vorteilhafterweise in Abhängigkeit einer erkannten Fahrbahnneigung berechnet.

Im Hinblick auf das Regelungsverfahren zum Einstellen des geforderten Vor- oder auch Verstärkerdruckes bedeutet die oben beschriebene radindividuelle Regelung (über Einlass- und Auslassventil) der mehreren Radbremsen, dass für die Verstärkerdruckregelung eine sich ständig ändernde Regelstrecke vorliegt. Je nachdem, wie viele Einlassventile 6 gerade geöffnet sind, ändert sich die Volumenaufnahme und damit die Steifigkeit der Gesamtbremsanlage. Ist der Druck in einer Radbremse 9 oder mehreren Radbremsen kleiner als der eingestellte Druck im Druckraum 4 und wird nun das der Radbremse 9 zugeordnete Einlassventil 6 geöffnet, um Bremsdruck aufzubauen, so führt der nun vorhandene zusätzliche Volumenbedarf zu einer Reduzierung des Verstärkerdruckes, was durch eine entsprechende Ausgleichsbewegung des Kolbens 3 kompensiert werden muss. Bezogen auf den zu betrachtenden Druckregler führt das oben beschriebene Verfahren des radindividuellen Druckauf- bzw. -abbaus über das Ventilpaar 6, 7 daher zu einer teilweise sehr signifikanten Störanregung.

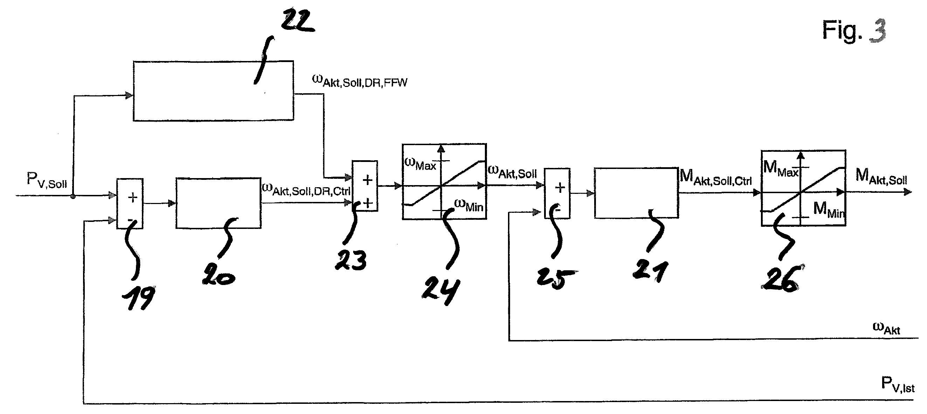

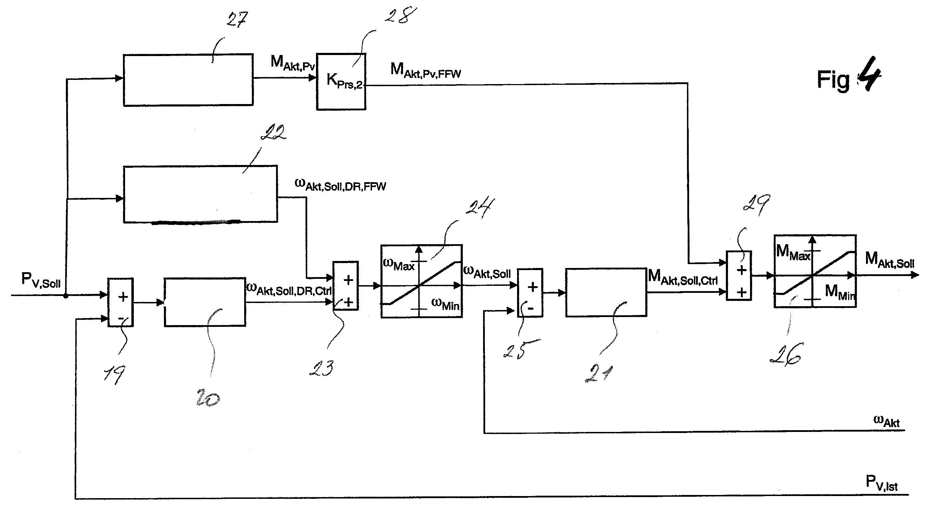

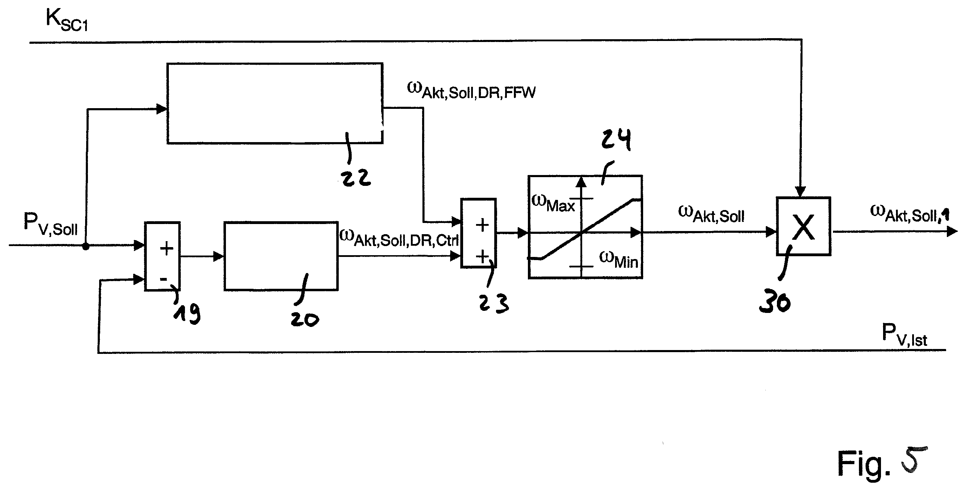

Ein Ausführungsbeispiel eines ersten Reglers zum Einstellen eines geforderten Vordrucks oder Vordruckverlaufs ist in Fig. 3 in Form eines Blockschaltbildes dargestellt. Weitere Ausführungsbeispiele erfindungsgemäßer Regelschaltungen sind in Fig. 4 und 5 dargestellt.

Es handelt sich beispielsgemäß um einen Druckregler 20, dem ein Aktuatordrehzahlregler 21 unter Zwischenschaltung weiterer Schaltungselemente 23 - 25 unterlagert ist. Dabei wird dem Druckregler 20 das Ergebnis einer in einem Subtraktionsglied 19 durchgeführten Subtraktion bzw. die Abweichung $\Delta P_V$ zwischen dem geforderten Druck-Sollwert $P_{V,Soll}$ und dem gegenwärtig vorliegenden Druck-Istwert $P_{V,Ist}$ zugeführt. Die Ausgangsgröße des Druckreglers 20 ist der Sollwert für die Aktuatordrehzahl $\omega_{Akt,Soll,DR,Crl}$ der unter Berücksichtigung von vorgegebenen minimalen und maximalen Aktuatordrehzahlwerten $\omega_{Min}$, $\omega_{Max}$ dem Drehzahlregler 21 als Eingangsgröße übergeben wird. Der Druck-Sollwert $P_{V,Soll}$ ergibt sich aufgrund der in den vorangegangenen Abschnitten beschriebenen Anforderungen und entspricht dem bereits ausführlich erläuterten Sollwert $P_{Pre\_Pressure}$. Der Druck-Istwert $P_{V,Ist}$ entspricht dem im Druckraum 4 der in Fig. 1 gezeigten Druckbereitstellungseinrichtung 50 erzeugten Druckwert. Als Reglerübertragungsverhalten ist für den Fall, dass keine radselektiven Regeleingriffe stattfinden, ein proportional wirkender Regler (P-Regler) ausreichend. Zur Erhöhung der Druckreglerdynamik sind beispielsgemäß zwei Vorsteuerfunktionen durchführbar: eine Geschwindigkeitsvorsteuerung (22, siehe Fig. 3) und eine Aktuatormomentenvorsteuerung (27, wie sie zusätzlich in Fig. 4 dargestellt ist).

Ein Geschwindigkeitsvorsteuerungsberechnungsmodul 22 bestimmt aus dem Druck-Sollwert $P_{V,Soll}$ durch Differentiation einen Aktuatordrehzahl-Sollwert, der, mit einem Verstärkungsfaktor gewichtet, einen zusätzlichen Anteil $\omega_{Akt,Soll,DR,FFW}$ dem Aktuatordrehzahl-Sollwert des Druckreglers 20 $\omega_{Akt,Soll,DR,Ctrl}$ überlagert. Die beiden Solldrehzahlanteile werden in einem Addierer 23 zusammen addiert und einer Begrenzungsfunktion 24 zur Begrenzung auf die minimal bzw. maximal zulässige Solldrehzahl ($\omega_{Min}$, $\omega_{Max}$) zugeführt.

Der begrenzte Aktuatordrehzahl-Sollwert $\omega_{Akt,Soll}$ wird in einem weiteren Subtraktionsglied 25 zur Bildung einer Aktuatordrehzahl-Sollwertdifferenz $\Delta\omega_{Soll}$ mit dem Aktuatordrehzahl-Istwert $\omega_{Akt}$ verglichen. Die Aktuatordrehzahl-Sollwertdifferenz $\Delta\omega_{Soll}$ wird dem vorhin erwähnten Drehzahlregler 21 als Eingangsgröße zugeführt, dessen Ausgangsgröße einem Sollwert $M_{Akt,Soll,Ctrl}$ des vom Aktuator aufgebrachten Drehmoments entspricht. Der Drehmoment-Sollwert $M_{Akt,Soll,Ctrl}$ wird schließlich in einem zweiten Begrenzungsmodul 26 auf den minimal bzw. maximal zulässigen Momentenwert $M_{Akt,Soll}$ begrenzt.

Die in Fig. 4 gezeigte Regelschaltung entspricht weitgehend dem in Fig. 3 dargestellten Ausführungsbeispiel. Aus Fig. 4 ist jedoch ersichtlich, dass dem Druckregler 20 bzw. dem Geschwindigkeitsvorsteuerungsberechnungsmodul 22 ein weiterer Signalpfad parallel geschaltet ist, der durch ein Vorsteuermomentberechnungsmodul 27 sowie ein dem Vorsteuermomentberechnungsmodul 27 nachgeschaltetes Skalierungsglied 28 gebildet ist.

Die zweite Vorsteuerkomponente besteht aus der Berechnung und direkten Vorgabe des dem Druck-Sollwert

$P_{V,Soll}$ entsprechenden Aktuatormoments $M_{Akt,PV}$, wobei mit Hilfe des Skalierungsglieds 28 bzw. dessen Verstärkungsfaktors $K_{Prs,2}$ ($0 \leq K_{Prs,2} \leq 1$) definiert werden kann, wie stark die Gewichtung dieser Vorsteuerung ist. Das erwähnte skalierte Signal $M_{Akt,PV,FFW}$ wird in einem zweiten Addierer 29 zu dem Ausgangssignal $M_{Akt,Soll,Ctrl}$ des Drehzahlreglers 21 hinzu addiert, während das Ergebnis der Addition einer Begrenzungsfunktion zugeführt wird, die in diesem Zusammenhang mit dem Bezugszeichen 26' versehen ist. Die Aufgabe der Begrenzungsfunktion 26' entspricht jedoch der im Zusammenhang erläuterten Begrenzungsfunktion 26 und braucht nicht erläutert zu werden.

Aufgabe des Drehzahlreglers 21, der üblicherweise proportional-integrierendes (PI-) Verhalten aufweist, ist die möglichst schnelle und genaue Einstellung des geforderten Aktuatordrehzahl-Sollwertes $\omega_{Akt,Soll}$, sowie die Kompensation der auf den Motor wirkenden Lastmomente, die hier im Wesentlichen durch den im Druckraum 4 eingestellten Verstärkerdruck $P_{V,Ist}$ verursacht werden. Die beschriebene und in Fig. 4 dargestellte Momentenvorsteuerung wirkt dabei unterstützend, da in diesem Fall das Lastmoment weitgehend von der Größe $M_{Akt,PV,FFW}$ vorgesteuert wird und nicht durch den Integralanteil des Drehzahlreglers aufgebracht werden muss.

Ein weiteres Ausführungsbeispiel ist in Fig. 5 dargestellt. Das in Fig. 5 dargestellte Blockschaltbild zeigt schließlich eine modifizierte Teildarstellung der Regelschaltung gemäß Fig. 3, wobei die gleichen Schaltungselemente mit den gleichen Bezugszeichen versehen sind. Bei der in Fig. 5 dargestellten Ausführung erfolgt jedoch eine Skalierung der Ausgangsgröße des Begrenzungsmoduls 24, die dem begrenzten Sollwert $\omega_{Akt,Soll}$ der Aktuatordrehzahl entspricht, mit dem Skalierungsfaktor $K_{SC1}$, die in dem Multiplikationsglied 30 durchgeführt wird. Der skalierte Aktuatordrehzahl-Sollwert $\omega_{Akt,Soll,1}$ wird wieder dem Subtraktionsglied 25 (siehe Fig. 3) zur weiteren Bearbeitung zugeführt. Zur Berücksichtigung der beschriebenen Problematik der sich fortlaufend ändernden Regelstrecke durch die variable Anzahl der mit dem Druckraum 4 hydraulisch verbundenen Radbremsen 9 für den Fall, dass ein radindividueller Druckaufbau bzw. -abbau vorgenommen wird, wird beispielsgemäß vorgeschlagen, dass für diesen Fall die resultierende Stellgröße des Druckreglers 20, die Solldrehzahl $\omega_{Akt,Soll}$, um einen entsprechenden Skalierungsfaktor $K_{SC1}$ reduziert wird:

$$\omega_{Akt,Soll,1} = K_{SC1} * \omega_{Akt,Soll}$$

Für den Skalierungsfaktor $K_{SC1}$ gilt vorteilhafterweise:

$$K_{SC1} = Minimum\ (1,\ K_{SC1,ABS},\ K_{SC1,TCS},\ \dots.,\ K_{SC1,ESP})$$

Der Skalierungsfaktor $K_{SC1}$ ergibt sich also als der Wert, der von allen Einzelskalierungsfaktoren der kleinste ist. Durch die Berücksichtigung dieses Faktors wird ein, im Vergleich zur Normalbremsfunktion, bei der alle Radbremsen 9 hydraulisch mit dem Druckraum 4 verbunden sind (Skalierungsfaktor $K_{SC1}$ = 1), vorsichtigerer Eingriff der Verstärkerdruckreglers vorgenommen, da die Solldrehzahl entsprechend herunterskaliert wird und damit nicht so stark in den Regelkreis eingreift. Die Größe des Skalierungsfaktors und damit auch die Stärke der Reduktion der unskalierten Druckreglerstellgröße $\omega_{Akt,Soll}$ hängt davon ab, welche Bremsenregel- oder Assistenzfunktion aktiv ist.

In einem weiteren Ausführungsbeispiel kann dieser Faktor zusätzlich noch von der Zahl der hydraulisch mit dem Druckraum 4 verbundenen Radbremsen 9 abhängig gemacht werden.

Die Definition der Einzelskalierungsfaktoren soll hier exemplarisch am Faktor $K_{SC1,ABS}$ aufgezeigt werden. Für die weiteren, zu Beginn beschriebenen Bremsenregelfunktionen oder Assistenzfunktionen gilt dies dann entsprechend.

Beispielsgemäß wird angesetzt:

$K_{SC1,ABS}$ = $K_{ABS}$, wenn die ABS-Regelung aktiv ist, und
$K_{SC1,ABS}$ = 1, ansonsten.

Für den Parameter $K_{ABS}$ gilt: $0 < K_{ABS} \leq 1$.

In einer Normalbremsfunktion, bei der der Fahrer durch die Pedalbetätigung einen Bremsdruck anfordert, oder bei einer Assistenzfunktion, die einen zentralen Bremsdruck für alle Radbremsen anfordert, ist der Skalierungsfaktor $K_{SC1}$ = 1. Sind keine radindividuellen Regelfunktionen aktiv, dann behält der resultierende Skalierungsfaktor $K_{SC1}$ daher den Wert 1 und die Solldrehzahl als Stellgröße des Druckreglers wird unverändert an die unterlagerte Motordrehzahlregelung ausgegeben. Es liegt für den Druckregler die maximale Ausnutzung der Regler- und Aktuatordynamik vor. Auf der anderen Seite wird durch das beschriebene Verfahren vermieden, dass für den Fall, dass in einem oder mehreren Radbremsen 9 ein radindividueller Druckabbau oder -aufbau vorgenommen wird, es zu starken Druckschwingungen im Druckraum 4 durch einen zu hohen Verstärkungsfaktor und damit zu hohen Stellgrößen durch den Verstärkerdruckregler kommt.

Während für die Normalbremsfunktion und die meisten der Assistenzfunktionen ein zentraler Bremsdruck bzw.

Bremsdruckverlauf für alle Radbremsen angefordert wird, der zwar möglichst schnell, aber dennoch komfortabel und fein dosierbar eingestellt werden soll, steht bei einer radindividuellen Bremsenregelfunktion zur Erhöhung der Fahrstabilität die Dynamik und das Beibehalten des vorgegebenen Vordruckes unabhängig von der durch die Ventilaktivitäten verursachten Störanregung im Vordergrund.

Zur Behandlung der erwähnten signifikanten Störanregung des betrachteten Verstärkerdruckregler bedingt durch die Notwendigkeit eines radindividuellen Druckauf- bzw. -abbaus über das Ventilpaar 6, 7 wird beispielsgemäß weiterhin vorgeschlagen, für diesen Fall die Struktur des (üblicherweise nach Komfort- und Dosierbarkeitskriterien ausgelegten) Verstärkerdruckreglers zu erweitern und die Reglerparameter zu modifizieren. Durch diese Modifikation ist die Verstärkungsdruckregelung besser in der Lage, die durch die radindividuelle Bremsenregelfunktion und die Ventilaktivitäten bedingten Störanregungen des Druckregelkreises, wie dies vor allem bei der ABS-Funktion in signifikanter Form auftritt, besser auszuregeln. Hierzu wird für den Fall, dass die ABS-Funktion aktiv ist und eine radindividuelle Druckregelung vornimmt, der Verstärkerdruckregler, der von seiner Grundstruktur P-Verhalten hat, um einen differenzierenden (D-) Anteil erweitert, sodass den Störanregungen schneller mit einer entsprechenden Stellgröße entgegengewirkt werden kann.

Zur Unterstützung des Druckreglers im ABS-Regelmodus wird weiterhin beispielsgemäß vorgeschlagen, für diesen Fall die Parameter des Drehzahlreglers ebenfalls zu verändern und zwar in Hinblick auf verbessertes Führungsverhalten.

**Patentansprüche**

1.  Verfahren zur Regelung eines elektrohydraulischen Bremssystems für Kraftfahrzeuge mit zumindest einer Bremsdruckregel- oder Bremsdrucksteuerfunktion, insbesondere einer Antiblockierregelfunktion und einer weiteren Bremsdruckregel- oder Bremsdrucksteuerfunktion, welches vorzugsweise in einer "Brake-by-wire"-Betriebsart ansteuerbar ist, mit einer mittels einer elektronischen Steuer- und Regeleinheit ansteuerbaren Druckbereitstellungseinrichtung (50), welche mit hydraulisch betätigbaren Radbremsen (9) verbunden oder verbindbar ist und mittels welcher die Radbremsen (9) über mindestens ein Druckregelventil (6) hydraulisch betätigbar sind, wobei die Druckbereitstellungseinrichtung eine Zylinder-Kolben-Anordnung mit einem hydraulischen Druckraum (4) umfasst, deren Kolben (3) durch einen elektromechanischen Aktuator (1, 2) relativ zu einer Ruheposition (15, 111) verschiebbar ist, wobei für jede Radbremse (9) ein Solldruckwert ($P_{Request\_i}$) bestimmt wird, **dadurch gekennzeichnet, dass** die Zylinder-Kolben-Anordnung (3, 4) derart angesteuert wird, dass ein vorbestimmter Vordruck ($P_{Pre\_Pressure}$) in dem hydraulischen Druckraum (4) durch Verschiebung (s, 14) des Kolbens (3) eingestellt wird, der aus den Solldruckwerten ($P_{Request\_i}$) bestimmt wird, wobei der Vordruck ($P_{Pre\_pressure}$) als der Größte der Solldruckwerte ($P_{Request\_i}$) gewählt wird.

2.  Verfahren nach Anspruch 1, **dadurch gekennzeichnet, dass** die aktuelle Verschiebung/Position (14) des Kolbens (3) mit zumindest einem vorbestimmten Positionsschwellenwert (17, 113; 18, 120) verglichen wird und dass der Kolben (3), insbesondere um einen vorbestimmten Wegbetrag, in Richtung der Ruheposition (15, 111) verschoben wird (Saugzyklus), wenn die aktuelle Verschiebung/Position (14) des Kolbens (3) den Positionsschwellenwert (17, 113; 18, 120) überschreitet, wodurch Bremsflüssigkeit aus einem Bremsflüssigkeitvorratsbehälter (11) in den hydraulischen Druckraum (4) fließt.

3.  Verfahren nach Anspruch 2, **dadurch gekennzeichnet, dass** die Radbremsen (9) während des Verschiebens des Kolbens (3) in Richtung der Ruheposition (Saugzyklus) mittels elektrisch steuerbarer Einlassventile (6) von dem hydraulischen Druckraum (4) hydraulisch getrennt werden.

4.  Verfahren nach mindestens einem der Ansprüche 1 bis 3, **dadurch gekennzeichnet, dass** der Solldruckwert ($P_{Request\_i}$) für eine Radbremse (i) aus einer Bremsanforderung eines Fahrers, zumindest einer Bremsanforderung der weiteren aktiven Bremsdruckregel- oder Bremsdrucksteuerfunktion für die Radbremse (i) und einer Bremsanforderung, welche anhand einer Information über den Zustand der Antiblockierregelfunktion an der Radbremse (i) bestimmt wird, bestimmt wird.

5.  Verfahren nach Anspruch 4, **dadurch gekennzeichnet, dass** die Bremsanforderung, welche anhand der Information oder des Zustandes der Antiblockierregelung an der Radbremse (i) bestimmt wird, durch Addition von einem vorgegebenen Druckbetrag ($\Delta P$) und einem rad-spezifischen Druckwert der Antiblockierregelung bestimmt wird, der ein Blockieren mindestens einer Radbremse (i) zur Folge hat, wenn die Antiblockierregelfunktion an der Radbremse (i) aktiv den Solldruckwert ($P_{Request\_i}$) bestimmt.

**6.** Verfahren nach Anspruch 4, **dadurch gekennzeichnet, dass** die Bremsanforderung, welche anhand der Information oder des Zustandes der Antiblockierregelung an der Radbremse (i) bestimmt wird, durch Addition von einem vorgegebenen Druckbetrag ($\Delta$P) und einem vorgegebenen Maximaldruck bestimmt wird, wenn die Antiblockierregelfunktion an der Radbremse (i) nicht aktiv ist oder nicht den Solldruckwert ($P_{Request\_i}$) bestimmt.

**7.** Verfahren nach mindestens einem der Ansprüche 2 bis 6, **dadurch gekennzeichnet, dass** der Positionsschwellenwert (17, 113; 18, 120) in Abhängigkeit einer Fahrzeuggeschwindigkeit und/oder eines erreichten Druckwertes der Radbremsen und/oder einer Fahrbahnneigung bestimmt wird.

**8.** Verfahren nach mindestens einem der Ansprüche 2 bis 7, **dadurch gekennzeichnet, dass** das Verschieben des Kolbens (3) in Richtung der Ruheposition (Saugzyklus) durchgeführt wird, wenn die aktuelle Verschiebung/Position (14) des Kolbens (3) einen ersten Positionsschwellenwert überschreitet und gleichzeitig eine weitere Bedingung erfüllt ist.

**9.** Verfahren nach mindestens einem der Ansprüche 2 bis 8, **dadurch gekennzeichnet, dass** das Verschieben des Kolbens (3) in Richtung der Ruheposition (Saugzyklus) immer durchgeführt wird, wenn die aktuelle Verschiebung/Position (14) des Kolbens (3) einen zweiten Positionsschwellenwert überschreitet, wobei insbesondere der zweite Positionsschwellenwert größer ist als der erste Positionsschwellenwert.

**10.** Verfahren nach mindestens einem der Ansprüche 2 bis 9, **dadurch gekennzeichnet, dass** der Wegbetrag in Abhängigkeit einer Fahrzeuggeschwindigkeit und/oder eines erreichten Druckwertes der Radbremsen und/oder einer Fahrbahnneigung bestimmt wird.

**11.** Verfahren nach einem oder mehreren der vorhergehenden Ansprüche 1 bis 10, **dadurch gekennzeichnet, dass** ein Vordruck-Istwert ($P_{V,Ist}$) und ein Aktuatorgeschwindigkeit-Istwert ($\omega_{Akt}$) ermittelt werden, ein Vordruck-Sollwert ($P_{V,soll}$, $P_{Pre\_Pressure}$) bestimmt wird und der Vordruck-Sollwert ($P_{V,soll}$, $P_{Pre\_Pressure}$) und der Vordruck-Istwert ($P_{V,Ist}$) einer Reglervorrichtung als Eingangsgrößen zugeführt werden, welche einen Druckregler (20) und einen dem Druckregler nachgeschalteten Geschwindigkeitsregler (21) umfasst, wobei der Druckregler (20) einen Aktuatorgeschwindigkeit-Sollwert ($\omega_{Akt,Soll,DR,Ctrl}$) ausgibt und dem Geschwindigkeitsregler (21) als Eingangsgrößen ein Aktuatorgeschwindigkeit-Sollwert ($\omega_{Akt,\ Soll}$) und der Aktuatorgeschwindigkeit-Istwert ($\omega_{Akt}$) zugeführt werden.

**12.** Verfahren nach Anspruch 11, **dadurch gekennzeichnet, dass** der Druckregler (20) einen ersten Aktuatorgeschwindigkeit-Sollwert ($\omega_{Akt,soll,DR,Ctrl}$) ausgibt, aus dem Vordruck-Sollwert ($P_{V,Soll}$ bzw. $P_{Pre\_Pressure}$) ein zweiter Aktuatorgeschwindigkeit-Sollwert ($\omega_{Akt,Soll,DR,FFW}$) bestimmt wird und anhand des ersten und des zweiten Aktuatorgeschwindigkeit-Sollwert ($\omega_{Akt,Soll,DR,Ctrl}$, $\omega_{Akt,Soll,DR,FFW}$) der Eingangs-Aktuatorgeschwindigkeit-Sollwert ($\omega_{Akt,Soll}$) für den Geschwindigkeitsregler (21) bestimmt wird.

**13.** Verfahren nach Anspruch 12, **dadurch gekennzeichnet, dass** der erste und der zweite Aktuatorgeschwindigkeits- bzw. Aktuatordrehzahl-Sollwert ($\omega_{Akt,Soll,DR,Ctrl}$, $\omega_{Akt,Soll,DR,FFW}$), insbesondere gewichtet, aufaddiert werden.

**14.** Verfahren nach mindestens einem der Ansprüche 11 bis 13, **dadurch gekennzeichnet, dass** der dem Geschwindigkeitsregler (21) zugeführte Aktuatorgeschwindigkeit- bzw. Aktuatordrehzahl-Sollwert ($\omega_{Akt,Soll}$) in Abhängigkeit von der/den aktivierten Bremsdruckregel- oder Bremsdrucksteuerfunktion(en) (ABS, TCS, ESP), welche insbesondere einer radindividuellen Regelung entsprechen, und/oder in Abhängigkeit von der Anzahl der Radbremsen (9), welche mit dem hydraulischen Druckraum (4) verbunden sind, modifiziert, insbesondere reduziert, wird, indem der Aktuatorgeschwindigkeit-Sollwert ($\omega_{Akt,Soll}$) mit einem Skalierungsfaktor ($K_{SC1}$) multipliziert wird.

**15.** Verfahren nach Anspruch 14, **dadurch gekennzeichnet, dass** der Skalierungsfaktor ($K_{SC1}$) sich als der niedrigste der Einzel-Skalierungsfaktoren ($K_{SC1,ABS}$, $K_{SC1,TCS}$, $K_{SC1,ESP}$) der Bremsdruckregel- oder Bremsdrucksteuerfunktionen ergibt.

**16.** Verfahren nach Anspruch 15, **dadurch gekennzeichnet, dass** der Einzel-Skalierungsfaktor ($K_{SC1,ABS}$) einer, insbesondere jeder, Bremsdruckregel- oder Bremsdrucksteuerfunktion, welche insbesondere einer radindividuellen Regelung entspricht, zu einem vorgegebenen Wert ($K_{ABS}$), insbesondere größer Null und kleiner gleich Eins, gewählt wird, wenn die entsprechende Bremsdruckregel- oder Bremsdrucksteuerfunktion (ABS) aktiv ist, und zu Eins gewählt wird, wenn die entsprechende Bremsdruckregel- oder Bremsdrucksteuerfunktion (ABS) nicht aktiv ist.

**17.** Verfahren nach mindestens einem der Ansprüche 11 bis 16, **dadurch gekennzeichnet, dass** der Geschwindigkeitsregler (21) einen Aktuatormoment-Sollwert ($M_{Akt,Soll,ctrl}$) ausgibt, ein dem Vordruck-Sollwert ($P_{V,soll}$) entsprechendes Aktuatormoment ($M_{Akt,Pv}$) bestimmt wird und aus dem Aktuatormoment-Sollwert des Geschwindigkeitsreglers ($M_{Akt,Soll,Ctrl}$) und dem dem Vordruck-Sollwert entsprechenden Aktuatormoment ($M_{Akt,Pv}$), insbesondere durch gewichtete Addition ($K_{Prs,2}$) und/oder unter Berücksichtigung von vorgegebenen minimalen und maximalen Momentengrenzwerten ($M_{Min}$, $M_{Max}$), ein Aktuatormoment-Sollwert ($M_{Akt,Soll}$) zur Ansteuerung des Aktuators (1, 2) bestimmt wird.

18. Vorrichtung zur Regelung eines elektrohydraulischen Bremssystems für Kraftfahrzeuge, insbesondere mit zumindest einer Bremsdruckregel- oder Bremsdrucksteuerfunktion, welches vorzugsweise in einer "Brake-by-wire"-Betriebsart ansteuerbar ist, mit einer mittels einer elektronischen Steuer- und Regeleinheit ansteuerbaren Druckbereitstellungseinrichtung (50), welche mit hydraulisch betätigbaren Radbremsen (9) verbunden oder verbindbar ist und mittels welcher die Radbremsen (9) hydraulisch betätigbar sind, wobei die Druckbereitstellungseinrichtung eine Zylinder-Kolben-Anordnung mit einem hydraulischen Druckraum (4) umfasst, deren Kolben (3) durch einen elektromechanischen Aktuator (1, 2) verschiebbar ist, so dass ein Vordruck-Sollwert ($P_{V,Soll}$, $P_{Pre\_Pressure}$) in dem hydraulischen Druckraum (4) einstellbar ist, **dadurch gekennzeichnet, dass** ein Mittel zur Ermittlung eines Vordruck-Istwerts ($P_{V,Ist}$), ein Mittel zur Ermittlung eines Aktuatorgeschwindigkeits- bzw. Aktuatordrehzahl-Istwerts ($\omega_{Akt}$), ein Mittel zur Bestimmung des Vordruck-Sollwerts ($P_{V,Soll}$, $P_{Pre\_Pressure}$) vorgesehen sind und dass eine Regelschaltung vorgesehen ist, welche einen Druckregler (20) und einen dem Druckregler (20) nachgeschalteten Geschwindigkeits- bzw. Aktuatordrehzahlregler (21) umfasst, wobei der Vor-druck-Sollwert ($P_{V,Soll}$, $P_{Pre\_Pressure}$) und der Vordruck-Istwert ($P_{V,Ist}$) der Regelschaltung als Eingangsgrößen zugeführt werden, der Druckregler (20) einen Aktuatorgeschwindigkeits- bzw. Aktuatordrehzahl-Sollwert ($\omega_{Akt,Soll,DR,Ctrl}$) ausgibt und dem Aktuatorgeschwindigkeits- bzw. Aktuatordrehzahlregler (21) als Eingangsgrößen ein Aktuatorgeschwindigkeits- bzw. Aktuatordrehzahl-Sollwert ($\omega_{Akt,Soll}$) und der Aktuatorgeschwindigkeit- bzw. Aktuatordrehzahl-Istwert ($\omega_{Akt}$) zugeführt werden.

19. Vorrichtung, insbesondere nach Anspruch 18, **dadurch gekennzeichnet, dass** in einer elektronischen Steuer- und Regeleinheit ein Verfahren gemäß einem der Ansprüche 1 bis 17 durchgeführt wird.

## Claims

1. Method for controlling an electro-hydraulic braking system for motor vehicles, comprising at least one closed or open-loop brake pressure control function, in particular an antilock control function, and a further closed or open-loop brake pressure control function, which can preferably be activated in a "brake-by-wire" operating mode, and comprising a pressurization device (50), which can be activated by means of an electronic control unit and which is or can be connected to hydraulically actuated wheel brakes (9) and by means of which the wheel brakes (9) can be hydraulically actuated by way of at least one pressure regulating valve (6), wherein the pressurization device comprises a cylinder-piston arrangement having a hydraulic pressure chamber (4), the piston (3) of which arrangement can be displaced relative to a rest position (15, 111) by an electromechanical actuator (1, 2), wherein a set pressure value ($P_{Request\_i}$) is determined for each wheel brake (9), **characterized in that** the cylinder-piston arrangement (3, 4) is activated in such a way that a predetermined pre-pressure ($P_{Pre\_Pressure}$, which is determined from the set pressure values ($P_{Request\_i}$), is set in the hydraulic pressure chamber (4) by displacement (s, 14) of the piston (3), wherein the pre-pressure ($P_{Pre\_Pressure}$) is selected as the largest of the set pressure values ($P_{Request\_i}$).

2. Method according to Claim 1, **characterized in that** the actual displacement/position (14) of the piston (3) is compared with at least one predetermined position threshold value (17, 113; 18, 120) and that the piston (3) is displaced, in particular by a predetermined amount of travel, in the direction of the rest position (15, 111) (suction cycle) if the actual displacement/position (14) of the piston (3) exceeds the position threshold value (17, 113; 18, 120), so that brake fluid flows out of a brake fluid reservoir (11) into the hydraulic pressure chamber (4).

3. Method according to Claim 2, **characterized in that** during the displacement of the piston (3) in the direction of the rest position (suction cycle) the wheel brakes (9) are hydraulically isolated from the hydraulic pressure chamber (4) by means of electrically controllable inlet valves (6).

4. Method according to at least one of Claims 1 to 3, **characterized in that** the set pressure value ($P_{Request\_i}$) for a wheel brake (i) is determined from a braking request of a driver, at least one braking request of the other active closed or open-loop brake pressure control function for the wheel brake (i) and a braking request, which is determined on the basis of information on the state of the antilock control function on the wheel brake (i).

5. Method according to Claim 4, **characterized in that** the braking request, which is determined on the basis of the information or the state of the antilock control on the wheel brake (i), is determined by addition from a preset amount of pressure ($\Delta P$) and a wheel-specific pressure value of the antilock control, which results in a locking of at least one wheel brake (i), if the antilock control function on the wheel brake (i) actively determines the set pressure value ($P_{Request\_i}$).

6. Method according to Claim 4, **characterized in that** the braking request, which is determined on the basis of the information or the state of the antilock control on the wheel brake (i), is determined by addition from a preset amount of pressure ($\Delta P$) and a preset maximum pressure, if the antilock control function on the wheel brake (i) is inactive or does not determine the set pressure value ($P_{Request\_i}$).

7. Method according to at least one of Claims 2 to 6, **characterized in that** the position threshold value (17, 113; 18, 120) is determined as a function of a vehicle speed and/or a pressure value attained by the wheel brakes and/or a road incline.

8. Method according to at least one of Claims 2 to 7, **characterized in that** the displacement of the piston (3) in the direction of the rest position (suction cycle) is performed if the actual displacement/position (14) of the piston (3) exceeds a first position threshold value and a further condition is simultaneously fulfilled.

9. Method according to at least one of Claims 2 to 8, **characterized in that** the displacement of the piston (3) in the direction of the rest position (suction cycle) is always performed if the actual displacement/position (14) of the piston (3) exceeds a second position threshold value, the second position threshold value in particular being greater than the first position threshold value.

10. Method according to at least one of Claims 2 to 9, **characterized in that** the amount of travel is determined as a function of a vehicle speed and/or a pressure value attained by the wheel brakes and/or a road incline.

11. Method according to one or more of the preceding Claims 1 to 10, **characterized in that** a pre-pressure actual value ($P_{V,ist}$) and an actuator speed actual value ($\omega_{Akt}$) are detected, a pre-pressure set value ($P_{V,Soll}$, $P_{Pre\_Pressure}$) is determined and the pre-pressure set value ($P_{V,Soll}$, $P_{Pre\_Pressure}$) and the pre-pressure actual value ($P_{V,ist}$) are fed as input variables to a regulator device, which comprises a pressure regulator (20) and a speed regulator (21) connected to the pressure regulator on the output side, wherein the pressure regulator (20) delivers an actuator speed set value ($\omega_{Akt,Soll,DR,Ctrl}$) and an actuator speed set value ($\omega_{Akt,Soll}$) and the actuator speed actual value ($\omega_{Akt}$) are fed to the speed regulator (21) as input variables.

12. Method according to Claim 11, **characterized in that** the pressure regulator (20) delivers a first actuator speed set value ($\omega_{Akt,Soll,DR,Ctrl}$), a second actuator speed set value ($\omega_{Akt,Soll,DR,FFW}$) is determined from the pre-pressure set value ($P_{V,Soll}$, or $P_{Pre\_Pressure}$) and the input actuator speed set value ($\omega_{Akt,Soll}$) for the speed regulator 21 is determined on the basis of the first and the second actuator speed set values ($\omega_{Akt,Soll,DR,Ctrl}$, $\omega_{Akt,Soll,DR,FFW}$).

13. Method according to Claim 12, **characterized in that** the first and the second actuator speed or actuator rotational speed set values ($\omega_{Akt,Soll,DR,Ctrl}$, $\omega_{Akt,Soll,DR,FFW}$), in particular weighted, are added up.

14. Method according to at least one of Claims 11 to 13, **characterized in that** the actuator speed or actuator rotational speed set value ($\omega_{Akt,Soll}$) fed to the speed regulator (21) is modified, in particular reduced, as a function of the activated open or closed-loop brake pressure control function(s) (ABS, TCS, ESP), which in particular correspond to an individual-wheel control, and/or as a function of the number of wheel brakes (9), which are connected to the hydraulic pressure chamber (4), by multiplying the actuator speed or actuator rotational speed set value ($\omega_{Akt,Soll}$) by a scaling factor ($K_{SC1}$).

15. Method according to Claim 14, **characterized in that** the scaling factor ($K_{SC1}$) is obtained as the lowest of the individual scaling factors ($K_{SC1,ABS}$, $K_{SC1,TCS}$, $K_{SC1,ESP}$) of the closed or open-loop brake pressure control functions.

16. Method according to Claim 15, **characterized in that** the individual scaling factor ($K_{SC1,ABS,}$) of a, in particular each, closed or open-loop brake pressure control function, which in particular corresponds to an individual-wheel control, is selected as a preset value ($K_{ABS}$), in particular greater than zero and less than/equal to one, when the corresponding closed or open-loop brake pressure control function (ABS) is active, and is selected as one, when the corresponding closed or open-loop brake pressure control function (ABS) is inactive.

**17.** Method according to at least one of Claims 11 to 16, **characterized in that** the speed regulator (21) delivers an actuator torque set value ($M_{Akt,Soll,Ctrl}$), an actuator torque ($M_{Akt,PV}$) corresponding to the pre-pressure set value ($P_{V,Soll}$) is determined and an actuator torque set value ($M_{Akt,Soll}$) for activating the actuator (1, 2) is determined from the actuator torque set value of the speed regulator ($M_{Akt,Soll,Ctrl}$) and the actuator torque ($M_{Akt,PV}$) corresponding to the pre-pressure set value, in particular by weighted addition ($K_{Prs,2}$) and/or taking into account preset minimum and maximum torque limit values ($M_{Min}, M_{Max}$).

**18.** Device for controlling an electro-hydraulic braking system for motor vehicles, in particular comprising at least one closed or open-loop brake pressure control function, which can preferably be activated in a "brake-by-wire" operating mode, and comprising a pressurization device (50), which can be activated by means of an electronic control unit and which is or can be connected to hydraulically actuated wheel brakes (9) and by means of which the wheel brakes (9) can be hydraulically actuated, wherein the pressurization device comprises a cylinder-piston arrangement having a hydraulic pressure chamber (4), the piston (3) of which arrangement can be displaced by an electromechanical actuator (1, 2), so that a pre-pressure set value ($P_{V,Soll,Ppre\_Pressure}$) can be set in the hydraulic chamber (4), **characterized in that** a means for detecting a pre-pressure actual value ($P_{V,Ist}$), a means for detecting an actuator speed or actuator rotational speed actual value ($\omega_{Akt}$), a means for determining the pre-pressure set value ($P_{V,Soll}$, $P_{Pre\_Pressure}$) are provided and that a closed-loop control circuit is provided, which comprises a pressure regulator (20) and a speed or actuator rotational speed regulator (21) connected to the pressure regulator (20) on the output side, wherein the pre-pressure set value ($P_{V,Soll}$, $P_{Pre\_Pressure}$) and the pre-pressure actual value ($P_{V,Ist}$) are fed as input variables to the closed-loop control circuit, the pressure regulator (20) delivers an actuator speed or actuator rotational speed set value ($\omega_{Akt,Soll,DR,Ctrl}$), and an actuator speed or actuator rotational speed set value ($\omega_{Akt,Soll}$) and the actuator speed or actuator rotational speed actual value ($\omega_{Akt}$) are fed to the actuator speed or actuator rotational speed regulator (21) as input variables.

**19.** Device, particularly according to Claim 18, **characterized in that** a method according to one of Claims 1 to 17 is performed in an electronic control unit.

## Revendications

**1.** Procédé pour réguler un système de freinage électrohydraulique destiné à des véhicules à moteur, comprenant au moins une fonction de régulation ou de commande de pression de freinage, en particulier une fonction de régulation d'antiblocage et une autre fonction de régulation ou de commande de pression de freinage, laquelle peut être commandée de préférence en mode de fonctionnement « brake by wire », comprenant un dispositif de fourniture de pression (50) pouvant être commandé au moyen d'une unité de commande et de régulation électronique, lequel est relié ou peut être relié à des freins de roue (9) pouvant être actionnés hydrauliquement et au moyen duquel les freins de roue (9) peuvent être actionnés hydrauliquement par au moins une soupape de régulation de pression (6), dans lequel le dispositif de fourniture de pression comprend un agencement piston-cylindre avec une chambre de refoulement hydraulique (4) dont le piston (3) peut être poussé par le biais d'un actionneur électromécanique (1, 2) par rapport à une position de repos (15, 111), sachant qu'une valeur de pression nominale ($P_{Request\_i}$) est déterminée pour chaque frein de roue (9), **caractérisé en ce que** l'agencement piston-cylindre (3, 4) est ainsi commandé qu'une pré-pression ($P_{Pre\_Pressure}$) prédéterminée est réglée dans la chambre de refoulement hydraulique (4) par la poussée (s, 14) du piston (3), qui est définie par les valeurs de pression nominale ($P_{Request\_i}$), la pré-pression ($P_{Pre\_Pressure}$) étant sélectionnée comme étant la plus grande des valeurs de pression nominale ($P_{Request\_i}$).

**2.** Procédé selon la revendication 1, **caractérisé en ce que** la poussée/position (14) actuelle du piston (3) est comparée à au moins une valeur-seuil de position prédéterminée (17, 113 ; 18, 120) et que le piston (3) est poussé, en particulier d'une quantité de trajectoire prédéterminée, en direction de la position de repos (15, 111) (cycle d'aspiration), lorsque la poussée/position (14) actuelle du piston (3) dépasse la valeur-seuil de position (17, 113 ; 18, 120), ce par quoi du liquide de frein s'écoule d'un réservoir de liquide de frein (11) dans la chambre de refoulement hydraulique (4).

**3.** Procédé selon la revendication 2, **caractérisé en ce que** les freins de roue (9) sont séparés hydrauliquement de la chambre de refoulement hydraulique (4) pendant la poussée du piston (3) en direction de la position de repos (cycle d'aspiration) au moyen de soupapes d'admission pouvant être commandées électriquement (6).

**4.** Procédé selon au moins l'une des revendications 1 à 3, **caractérisé en ce que** la valeur de pression nominale

($P_{Request\_i}$) pour un frein de roue (i) est déterminée à partir d'une demande de freinage d'un conducteur, au moins d'une demande de freinage de l'autre fonction de régulation ou de commande de pression de freinage pour le frein de roue (i) et d'une demande de freinage qui est déterminée à l'aide d'une information sur l'état de la fonction de régulation d'anti-blocage sur le frein de roue (i).

5. Procédé selon la revendication 4, **caractérisé en ce que** la demande de freinage qui est déterminée à l'aide d'une information ou de l'état de la régulation d'anti-blocage sur le frein de roue (i), est déterminée en additionnant une quantité de pression ($\Delta P$) prédéfinie et une valeur de pression spécifique à la roue de la régulation d'anti-blocage, ayant pour conséquence un blocage d'au moins un frein de roue (i) lorsque la fonction de régulation d'anti-blocage détermine activement la valeur de pression nominale ($P_{Request\_i}$) sur le frein de roue (i).

6. Procédé selon la revendication 4, **caractérisé en ce que** la demande de freinage qui est déterminée à l'aide d'une information ou de l'état de la régulation d'anti-blocage sur le frein de roue (i), est déterminée en additionnant une quantité de pression ($\Delta P$) prédéfinie et une pression maximale prédéfinie, lorsque la fonction de régulation d'anti-blocage n'est pas active ou ne détermine pas la valeur de pression nominale ($P_{Request\_i}$) sur le frein de roue (1).

7. Procédé selon au moins l'une des revendications 2 à 6, **caractérisé en ce que** la valeur-seuil de position (17, 113 ; 18, 120) est déterminée en fonction d'une vitesse du véhicule et/ou d'une valeur de pression atteinte des freins de roue et/ou d'une inclinaison de la chaussée.

8. Procédé selon au moins l'une des revendications 2 à 7, **caractérisé en ce que** la poussée du piston (3) en direction de la position de repos (cycle d'aspiration) est effectuée lorsque la poussée/position (14) actuelle du piston (3) dépasse une première valeur-seuil de position et que parallèlement, une autre condition est remplie.

9. Procédé selon au moins l'une des revendications 2 à 8, **caractérisé en ce que** la poussée du piston (3) en direction de la position de repos (cycle d'aspiration) est toujours effectuée lorsque la poussée/position (14) actuelle du piston (3) dépasse une deuxième valeur-seuil de position, dans lequel en particulier la deuxième valeur-seuil de position est plus grande que la première valeur-seuil de position.

10. Procédé selon au moins l'une des revendications 2 à 9, **caractérisé en ce que** la quantité de trajectoire est déterminée en fonction d'une vitesse du véhicule et/ou d'une valeur de pression atteinte des freins de roue et/ou d'une inclinaison de la chaussée.

11. Procédé selon au moins l'une ou plusieurs des revendications précédentes 1 à 10, **caractérisé en ce qu'**une valeur réelle de pré-pression ($P_{V,Ist}$) et une valeur réelle de vitesse d'actionneur ($\omega_{Akt}$) sont calculées, une valeur nominale de pré-pression ($P_{V,Soll}$, $P_{pre\_pressure}$) est déterminée et la valeur nominale de pré-pression ($P_{V,Soll}$, $P_{pre\_pressure}$) et la valeur réelle de pré-pression ($P_{V,\,Ist}$) sont fournies à un dispositif de régulation en tant que grandeurs d'entrée, lequel comprend un régulateur de pression (20) et un régulateur de vitesse (21) monté en aval du régulateur de pression, dans lequel le régulateur de pression (20) émet une valeur nominale de vitesse d'actionneur ($\omega_{Akt,\,Soll,\,DR,\,Ctrl}$), et une valeur nominale de vitesse d'actionneur ($\omega_{Akt,\,Soll}$) et la valeur réelle de vitesse d'actionneur ($\omega_{Akt}$) sont fournies au régulateur de vitesse (21) en tant que grandeurs d'entrée.

12. Procédé selon la revendication 11, **caractérisé en ce que** le régulateur de pression (20) émet une première valeur nominale de vitesse d'actionneur ($\omega_{Akt,\,Soll,\,DR,\,Ctrl}$), une seconde valeur nominale de vitesse d'actionneur ($\omega_{Akt,\,Soll,\,DR,\,FFW}$) est calculée à partir de la valeur nominale de pré-pression ($_{PV,\,Soll}$, respectivement $P_{pre\_pressure}$) et à l'aide des première et seconde valeurs nominales de vitesse d'actionneur ($\omega_{Akt,\,Soll,\,DR,\,Ctrl}$, $\omega_{Akt,\,Soll,\,DR,\,FFW}$), la valeur nominale de vitesse d'actionneur d'entrée ($\omega_{Akt,\,Soll}$) est déterminée pour le régulateur de vitesse (21).

13. Procédé selon la revendication 12, **caractérisé en ce que** les première et seconde valeurs nominales de vitesse, respectivement, de nombre de tours d'actionneur ($\omega_{Akt,\,Soll,\,DR,\,Ctrl}$, ($\omega_{Akt,\,Soll,\,DR,\,FFW}$) sont additionnées, en particulier pondérées.

14. Procédé selon au moins l'une des revendications 11 à 13, **caractérisé en ce que** la valeur nominale de vitesse, respectivement de nombre de tours de l'actionneur ($\omega_{Akt,\,Soll}$) fournie au régulateur de vitesse (21) est modifiée, en particulier réduite, en fonction de la/des fonction(s) de régulation ou de commande de pression de freinage (ABS, TCS, ESP) qui correspondent en particulier à une régulation individuelle par roue et/ou en fonction du nombre de freins de roue (9) qui sont reliés à la chambre de refoulement hydraulique (4), **en ce que** la valeur nominale de vitesse d'actionneur ($\omega_{Akt,\,Soll}$) est multipliée par un facteur d'échelle ($K_{SC1}$).

**15.** Procédé selon la revendication 14, **caractérisé en ce que** le facteur d'échelle ($K_{SC1}$) se révèle comme étant le plus bas des facteurs d'échelle individuels ($K_{SC1,ABS}$, $K_{SC1,TCS}$, $K_{SC1,ESP}$) des fonctions de régulation de pression de freinage ou de commande de pression de freinage.

**16.** Procédé selon la revendication 15, **caractérisé en ce que** le facteur d'échelle individuel ($K_{SC1, ABS}$) d'une, en particulier de chaque, fonction de régulation ou de commande de pression de freinage, qui correspond en particulier à une régulation individuelle par roue, est sélectionné sur une valeur ($K_{ABS}$) prédéfinie, en particulier supérieure à zéro et inférieure ou égale à un, lorsque la fonction de régulation ou de commande de pression de freinage (ABS) correspondante est active, et sélectionné sur un, lorsque la fonction de régulation ou de commande de pression de freinage (ABS) correspondante est inactive.

**17.** Procédé selon au moins l'une des revendications 11 à 16, **caractérisé en ce que** le régulateur de vitesse (21) émet une valeur nominale de couple d'actionneur ($M_{Akt, Soll, Ctrl}$), un couple d'actionneur ($M_{Akt, PV}$) correspondant à la valeur nominale de pré-pression ($_{PV, Soll}$) est déterminé et, à partir de la valeur nominale de couple d'actionneur du régulateur de vitesse ($M_{Akt, Soll, Ctrl}$) et du couple d'actionneur ($M_{Akt, PV}$) correspondant à la valeur nominale de pré-pression, en particulier par l'addition pondérée ($K_{Prs}$,2) et/ou en tenant de valeurs-seuils de couple minimale et maximale ($M_{Min}$, $M_{Max}$), une valeur nominale de couple d'actionneur ($M_{Akt, Soll}$) est déterminée pour commander l'actionneur (1, 2).

**18.** Dispositif pour réguler un système de freinage électrohydraulique destiné à des véhicules à moteur comprenant au moins une fonction de régulation ou de commande de pression de freinage, laquelle peut être commandée de préférence en mode de fonctionnement « brake by wire », comprenant un dispositif de fourniture de pression (50) pouvant être commandé au moyen d'une unité de commande et de régulation électronique, lequel est relié ou peut être relié à des freins de roue (9) pouvant être actionnés hydrauliquement et au moyen duquel les freins de roue (9) peuvent être actionnés hydrauliquement, dans lequel le dispositif de fourniture de pression comprend un agencement piston-cylindre avec une chambre de refoulement hydraulique (4) dont le piston (3) peut être poussé par le biais d'un actionneur électromécanique (1, 2) de sorte qu'une valeur nominale de pré-pression ($P_{V, Soll}$, $P_{Pre\_Pressure}$) peut être réglée dans la chambre de refoulement hydraulique (4), **caractérisé en ce qu'**un moyen pour calculer une valeur réelle de pré-pression ($Pv, _{Ist}$), un moyen pour calculer une valeur réelle de vitesse d'actionneur, respectivement de nombre de tours de l'actionneur ($\omega_{Akt}$), un moyen pour déterminer la valeur nominale de pré-pression ($P_{V, Soll}$, $P_{Pre\_Pressure}$) sont prévus et qu'un circuit de régulation est prévu, qui comprend un régulateur de pression (20) et un régulateur de vitesse, respectivement de nombre de tours de l'actionneur monté en aval du régulateur de pression (20), dans lequel la valeur nominale de pré-pression ($P_{V, Soll}$, $P_{Pre\_Pressure}$) et la valeur réelle de pré-pression ($P_{V, Ist}$) sont fournies au circuit de régulation en tant que grandeurs d'entrée, le régulateur de pression (20) émet une valeur nominale de vitesse d'actionneur respectivement de nombre de tours de l'actionneur ($\omega_{Akt, Soll, DR, Ctrl}$), et une valeur nominale de vitesse d'actionneur respectivement de nombre de tours de l'actionneur ($\omega_{Akt, Soll}$) et la valeur réelle de vitesse d'actionneur respectivement de nombre de tours de l'actionneur ($\omega_{Akt}$) sont fournies au régulateur de vitesse respectivement de nombre de tours de l'actionneur (21) en tant que grandeurs d'entrée.

**19.** Dispositif, en particulier selon la revendication 18, **caractérisé en ce qu'**un procédé selon l'une des revendications 1 à 17 est exécuté dans une unité de commande et de régulation électronique.

Fig. 1

Fig. 2

EP 2 580 095 B1

Fig. 3

Fig 4

Fig. 5

$\omega_{Akt,Soll,1}$

$P_{V,Ist}$

$\omega_{Akt,Soll}$

$K_{SC1}$

$\omega_{Akt,Soll,DR,FFW}$

$\omega_{Akt,Soll,DR,Ctrl}$

$\omega_{Max}$

$\omega_{Min}$

$P_{V,Soll}$

20

24

23

22

20

19

30

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008025797 A1
- WO 2006111393 A1